# EUROPEAN PATENT SPECIFICATION

(11) **EP 0 757 784 B1**
(45) Date of publication and mention of the grant of the patent: **06.10.1999**
(21) Application number: 95916761.0
(22) Date of filing: 25.04.1995
(51) Int. Cl.: G01F 23/296, G01N 29/02

(54) **PIEZOELECTRIC SENSING METHOD**
PIEZOELEKTRISCHE MESSMETHODE
METHODE DE DETECTION PIEZO-ELECTRIQUES

(30) Priority: 25.04.1994 GB 9408176
(43) Date of publication of application: 12.02.1997
(73) Proprietor: Sensor Systems (Jersey) Limited, St. Helier, Jersey JE2 4RU Channel Islands (GB)
(72) Inventor: CASSELDEN, Ian, Bexhill-on-Sea Sussex TN40 2NY (GB)
(74) Representative: McCarthy, Denis Alexis
(86) International application number: GB9500938
(87) International publication number: WO9529388

(56) References cited:
- EP-A- 0 123 189
- DE-A- 2 632 632
- FR-A- 2 436 372

## Description

This invention re!ates to a piezoelectric sensing system wherein a variable characteristic of a piezoelectric sensor is monitored to detect variations in a characteristic of a medium surrounding the sensor.

It is known to provide a fluid level detector in which the change in resonance frequency of a piezoelectric element when the element is immersed in a fluid is detected. Such an arrangement is disclosed, for example, in EP-A-0123189. In this known detector, the piezoelectric element is driven by an external drive oscillation circuit and resonance is detected by monitoring the phase difference between the voltage and current in he drive circuit. At resonance, the voltage and current will be in phase.

In FR-A-2,436,372 there is disclosed a fluid level monitoring device in which a periodic drive signal is applied to vibrate a piezoelectric sensing element at or close to its resonant frequency, and the current supplied to the element is monitored to detect a change in the vibrating conditions when the element is immersed in the fluid.

There is a need for a more reliable and less costly system for sensing fluid levels.

According to the present invention, there is provided a method of sensing a variation in the characteristics of a medium surrounding a piezoelectric sensing element, the method comprising applying a periodic drive signal to vibrate the element at or close to its resonant frequency, and monitoring the effect of the said medium on the vibrating element, characterised in that after the drive signal is removed, the vibrating element responds to the drive signal by generating a return signal, and the return voltage signal is monitored to detect a shift in the resonant frequency.

Preferably, the drive signal is applied intermittently to the sensing element, and the return signal is monitored in the intervening intervals between the drive signals using time division multiplexing.

The drive signal is preferably applied from an I/O port of a microcontroller, and is then removed while the return signal is received at the port. The port is preferably held at a predetermined constant voltage, or logic level, for a short delay period before monitoring the return signal. This prevents the return signal swamping any variations in the signal from different sensing elements.

Preferably the drive signal is initially scanned through a range of frequencies and the return signal is monitored to detect the frequency closest to the resonant frequency of the sensing element.

The sensing system is of wide application and can be used whenever variations in the characteristic of a particular medium that affect the resonant frequency of the sensing element are to be detected. The system is particularly suited to the detection of fluid levels, for example the level of the oil in an oil storage tank.

By way of example only, some embodiments of the invention will now be described with reference to the accompanying drawings in which:
Fig. 1 is plan view of a multi-point fluid level detector;
Fig. 2 is a detail of one of the sensing elements in the detector of Fig. 1;
Fig. 3 is perspective view of the housing for the monitoring circuit of the detector;
Fig. 4 is a circuit diagram of the circuit for driving and monitoring one sensing element of the detector;
Fig. 5 is a waveform diagram illustrating an initial phase in the operation of the circuit of Fig. 4; and
Fig. 6 is a waveform diagram illustrating a subsequent phase in the operation of the circuit of Fig. 4.

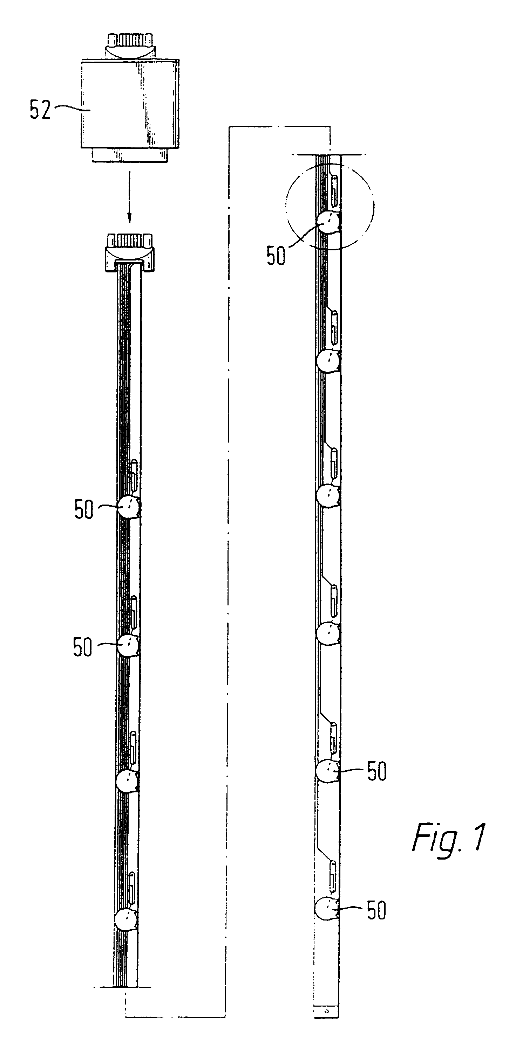

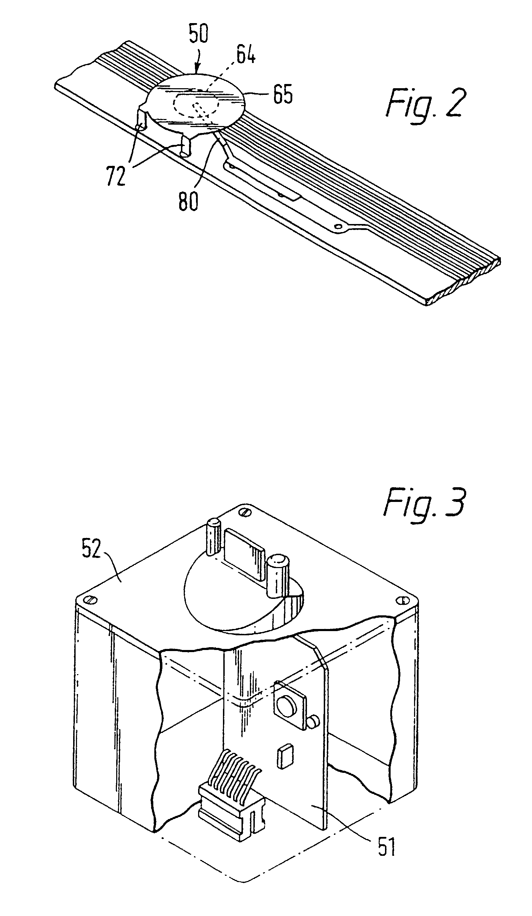

Figs. 1-3 illustrate a fluid level detector consisting of successive piezoelectric sensing elements 50 spaced apart along an elongate probe. A single sensing element 50 is shown in more detail in Fig. 2. In use, the probe is positioned within a container, and the level of a fluid in the container is detected by sensing the number of sensing elements 50 immersed in the fluid. The probe shown in Figs. 1-3 is more fully described and separately claimed in our copending application EP 95916762A based on British Patent Application 9408189.0 and being filed concurrently herewith.

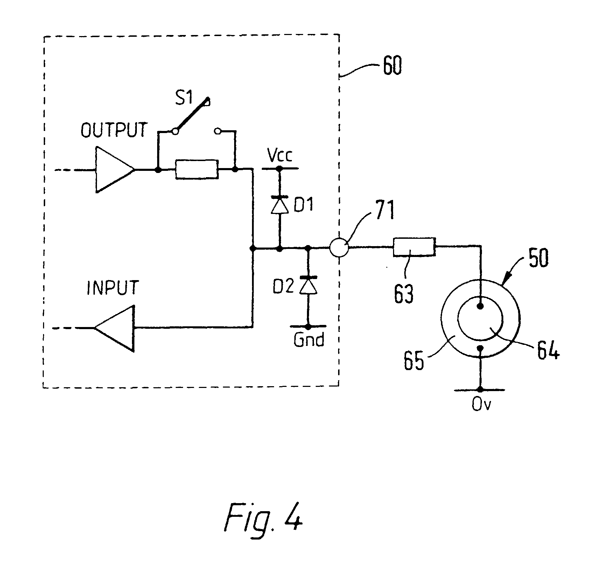

To sense whether or not a sensing element is immersed in the fluid, each element is connected to a monitoring circuit on a printed circuit board 51 contained within a housing 52 as shown in Fig. 3. The monitoring circuit is shown schematically in Fig. 4 and includes a microcontroller 60, for example an EPROM-based 8-bit CMOS microcontroller, such as the single chip PIC16C5X Series produced by Microchip Technology Inc. The microcontroller 60 includes an I/O circuit 70 capable of operating as an input (switch S1 open) and an output (switch S1 closed). Fig. 4 shows one such I/O port 71 connected to a piezoelectric sensing element 50 through an external resistor 63. Each sensing element 50 is connected to a respective I/O port 71 of the microcontroller 60.

The piezoelectric sensing element 50 consists of a piezo ceramic disc 64 bonded to a larger diameter backing plate 65. The backing plate is earthed. and a square wave voltage synthesised in the microcontroller 60 is applied to the disc. This produces vibrations of the plate 65 at the frequency of the drive signal. The sensing element will have a characteristic resonant frequency dependent on the size, mass and mounting of the element, and this resonant frequency will vary according to the viscosity of the medium surrounding the element. Accordingly, there will be a significant shift in the resonant frequency when the element becomes immersed in, or emerges from, the fluid in the container as the level of the fluid rises or falls.

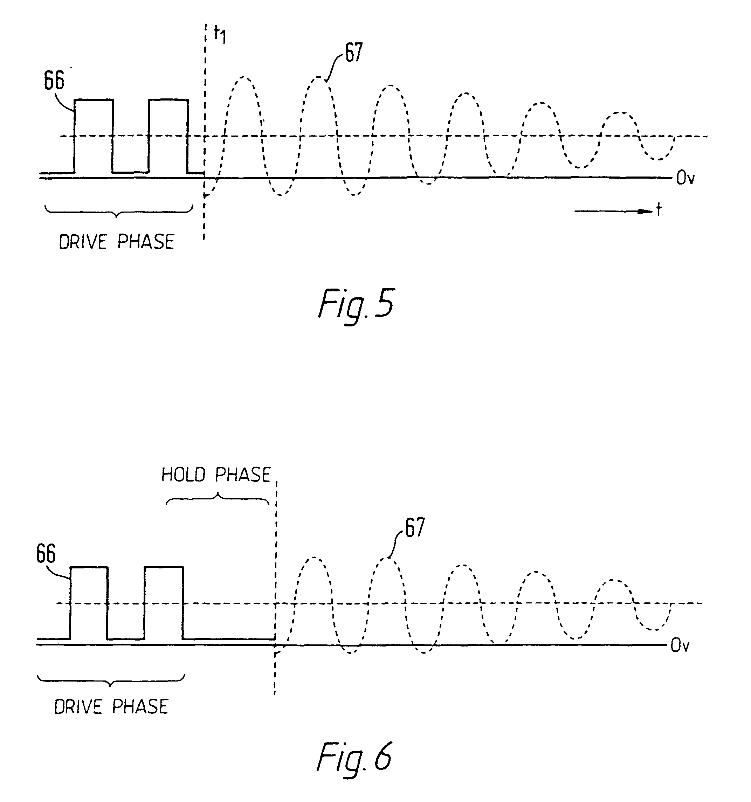

The shift in resonant frequency is detected by monitoring the characteristics of the return signal generated by the sensing element 50 when excited by a drive signal from the microcontroller 60. The drive signal 66 (Fig. 5) is initially swept through a range of frequencies with the I/O port 71 operating firstly as an output port for each sampled frequency and then, in the intervening periods, as an input port to receive the return signal 67 generated by the sensing element. During this scanning phase of the process, the drive and return signals have the form shown in Fig. 5.

The purpose of the scanning phase is to establish a point close the resonant frequency of the sensing element. This is achieved by the microcontroller 60 counting the number of cycles of the return signal 67 which are received before the signal decays below the threshold level of the input gate, and detecting the peak number of cycles.

Having determined this approximate resonant point, the microcontroller 60 continues by feeding bursts of a drive signal 66 to the resonating element at a frequency close to the detected resonance point, measuring the period of the return signal from each burst, and adjusting the frequency of the drive signal on each occasion so that it lies as close as possible to the measured period.

Since the frequency of the drive signal is synthesised in the microcontroller using a digital processor, the microcontroller is only able to generate an output frequency in discrete steps of, for example, 4 microseconds corresponding to frequency steps of 50-100Hz dependent on clock speed, software and the type of microcontroller. Accordingly, several bursts of the drive signal are necessary before the output settles itself at a particular frequency or hunts back and forth between two frequencies either side of the resonant frequency.

During this tracking phase of the operation, the signals have the form shown in Fig. 6. By measuring the period of the return signal 67, the microcontroller is able to detect a shift in the resonance frequency when the sensing element becomes immersed in, or emerges from, the fluid in the container.

If the return signal 67 was fed back into the I/O circuit 70 immediately the drive signal 66 was removed, the peak to peak magnitude of the signal could be around twice the drive voltage and this could mask the variation in the peak return signals at resonance and just off-resonance. Accordingly, during the tracking phase shown in Fig. 6, each return signal is damped by holding the output 71 at a constant value (logic 0) for a few cycles before admitting the return signal. In this manner, some of the energy in the resonating sensing element is discharged before the return signal is detected.

The sensing system thus operates on the basis of time division multiplexing using a single input/output pin 71 of the microcontroller 60. The microcontroller includes a crystal oscillator providing a reference clock signal, and the drive signal 66 is synthesised by a software program responsive to the period of the return signal 67.

In addition, the return signal 67 must be biased to ensure that it crosses the logic thresholds of the input gate to the microcontroller. This could be achieved by a resistor network. However, in the present example, it is achieved as a by-product of the DC average component so that a DC bias of half the drive voltage will be achieved. The bias will be finely controlled by a combination of duty cycle of the drive signal and the duration and polarity of the hold phase.

The microcontroller 60 includes a pair of parasitic diodes Dl, D2 associated with the input circuit 70. At the end of the drive and hold phases, the drive is removed and becomes high impedance. At this point, the resonating plate 65 of the sensing element 50, when excited near its resonant frequency, will continue to oscillate, distorting the ceramic disc 64 and thus producing a voltage. When the drive signal is of a frequency near to the resonance of the piezo ceramic assembly (including the mounting legs 72, electrical contacts and most significantly the surrounding medium) and sufficient cycles have been applied to achieve peak distortion, the peak voltage of the returned signal 67 will be greater than the supply voltage Vcc to the drive circuit. Accordingly, the diodes D1, D2 will conduct when the positive half cycle exceeds Vcc (+ 0.6v) and when the negative half cycle is below GND (-0.6v). During these periods the current drawn will tend to charge or discharge the bias circuit to bring the average of the generated return waveform to midway between the supply voltage rails of the drive circuit, thus ensuring that the generated voltage fully achieves both logic states, i.e. it crosses the logic thresholds of the input gate, at least for the early cycles of the decaying voltage.

The drive phase of Fig. 5 is a series of drive cycles, the number being sufficient to achieve maximum energy levels for a resonator of given dimensions and low enough to ensure noise levels do not become significant. During this period, energy is built up in the resonating plate provided the drive signal is close to the resonant frequency of the assembly. Upon removal of the drive signal (at ti) the resonator plate 65 will continue to vibrate or ring, as a drum would once struck, producing a voltage that will be clipped by the parasitic diodes D1, D2 and current limited by the external series resistor 63. This continuing vibration will decay in a predictable time governed by the value of the series resistor, the quality of the mounting system of the resonator, and the mass and mechanical damping created by the conductors 80 (Fig. 2) that carry the signals to and from the piezo ceramic disc 64. In addition, the combination of the value of the resistor 63 and the final drive level of the signal 66 before the drive is removed, will set the centre of the resultant waveform. Selecting the resistor 63 such that the centre voltage is close to the logic threshold of the microcontroller (typically 1.5v - 2.5v) will increase sensitivity at the expense of noise immunity.

The circuit has a number of significant advantages, including low cost drive and detect circuits, a large feedback signal (created by the large dimensions of the ceramic used for both drive and feedback) and a closed loop resonator principally under software control, enabling complex filtering, phase shift, drive frequency synthesis, signal damping and increased drive cycles to compensate for degradation of the resonator caused by ageing or build up of deposits.

## Claims

1. A method of sensing a variation in the characteristics of a medium surrounding a piezoelectric sensing element (10, 30, 40, 50), the method comprising applying a periodic drive signal (66) to vibrate the element at or close to its resonant frequency, and monitoring the effect of the said medium on the vibrating element, characterised in that after the drive signal is removed, the vibrating element responds to the drive signal by generating a return signal (67), and the return voltage signal is monitored to detect a shift in the resonant frequency.

2. A method according to claim 1 wherein the drive signal (66) is applied intermittently to the sensing element (10, 30, 40, 50), and wherein the return signal (67) is monitored in the intervening intervals between the drive signals using time division multiplexing.

3. A method according to claim 2 wherein the period of each return signal (67) is detected, and the detected period controls the frequency of the subsequent drive signal (66) applied to the sensing element.

4. A method according to any one of the claims 1-3 in which the monitoring of each return signal (67) is delayed for a predetermined interval after removal of the drive signal (66).

5. A method according to claim 4, in which the drive signal (66) is supplied from an I/O port (71) of a microcontroller (60), and the return signal (67) is received at the said port.

6. A method according to claim 5, in which the I/O port (71) is held at a predetermined voltage during the delay interval and prior to monitoring the return signal.

7. A method according to any one of the preceding claims wherein the drive signal (66) is initially scanned through a range of frequencies including the expected resonant frequency of the sensing element.

8. A method according to claim 7, in which the return signal (67) is monitored during the said scanning of frequencies to detect the drive signal closest to the resonant frequency.

9. A method according to claim 8, in which the return signal (67) is monitored during the scanning of frequencies by detecting the number of received cycles having an amplitude exceeding a predetermined threshold level.

10. A method according to any one of the preceding claims, wherein the drive signal (66) is applied successively to a plurality of the sensing elements (10, 30, 40, 50) spaced apart from one another, and the return signals (67) from each sensing element are monitored to detect any variation in a characteristic of a medium surrounding the elements.

11. A method according to claim 10, in which the return signals are monitored to detect the presence or absence of a fluid at the level of the respective sensing elements.

12. The use of a method according to any one of the preceding claims for sensing the level of a fluid.

## Patentansprüche

1. Verfahren zum Messen einer Veränderung der Eigenschaft eines ein piezoelektrisches Fühlerelement (10, 30, 40, 50) umgebenden Mediums, wobei das Verfahren umfaßt, ein periodisches Treibersignal (66) anzulegen, um das Element in Schwingungen zu versetzen, die bei oder in der Nähe seiner Resonanzfrequenz liegen, und die Wirkung des Mediums auf das schwingende Element zu überwachen, dadurch gekennzeichnet, daß nach Abschalten des Treibersignals das schwingende Element durch Erzeugen eines Rücksignals (67) auf das Treibersignal reagiert und das Rückspannungssignal zur Erfassung einer Verschiebung der Resonanzfrequenz überwacht wird.

2. Verfahren nach Anspruch 1, bei dem das Treibersignal (66) intermittierend an das Fühlerelement (10, 30, 40, 50) angelegt wird und bei dem das Rücksignal (67) durch Zeitmultiplex in den Zwischenräumen zwischen den Treibersignalen überwacht wird.

3. Verfahren nach Anspruch 2, bei dem die Periode jedes Rücksignals (67) erfaßt wird und die erfaßte Periode die Frequenz des nachfolgenden, an das Fühlerelement angelegten Treibersignals (66) steuert.

4. Verfahren nach einem der Ansprüche 1 - 3, bei dem das Überwachen jedes Rücksignals (67) nach dem Abschalten des Treibersignals (66) für eine vorbestimmte Zeitdauer verzögert wird.

5. Verfahren nach Anspruch 4, bei dem das Treibersignal (66) von einem E/A-Port (71) einer Mikrosteuerung (60) angelegt wird und das Rücksignal (67) an dem Port empfangen wird.

6. Verfahren nach Anspruch 5, bei dem der E/A-Port (71) während des Verzögerungszeitraums und vor dem Überwachen des Rücksignals auf einer vorbestimmten Spannung gehalten wird.

7. Verfahren nach einem der vorhergehenden Ansprüche, bei dem das Treibersignal (66) anfänglich durch einen Bereich von Frequenzen einschließlich der erwarteten Resonanzfrequenz des Fühlerelements geregelt wird.

8. Verfahren nach Anspruch 7, bei dem das Rücksignal (67) während des Durchlaufens der Frequenzen überwacht wird, um das der Resonanzfrequenz am nächsten liegende Treibersignal zu erfassen.

9. Verfahren nach Anspruch 8, bei dem das Rücksignal (67) während des Durchlaufens der Frequenzen durch das Erfassen der Anzahl empfangener Perioden mit einer Amplitude, die einen vorbestimmten Schwellwertpegel übersteigt, überwacht wird.

10. Verfahren nach einem der vorhergehenden Ansprüche, bei dem das Treibersignal (66) nacheinander an mehrere der voneinander beabstandeten Fühlerelemente (10, 30, 40, 50) angelegt wird und die Rücksignale (67) von jedem Fühlerelement überwacht werden, um eine etwaige Abweichung einer Eigenschaft eines die Elemente umgebenden Mediums zu erfassen.

11. Verfahren nach Anspruch 10, bei dem die Rücksignale überwacht werden, um die Anwesenheit oder Abwesenheit einer Flüssigkeit bei dem Pegelstand der jeweiligen Fühlerelemente zu erfassen.

12. Verwendung eines Verfahrens nach einem der vorhergehenden Ansprüche zum Messen des Pegels einer Flüssigkeit.

## Revendications

1. Procédé de détection d'une variation des caractéristiques d'un milieu entourant un élément piézoélectrique sensible (10, 30, 40, 50), le procédé comprenant l'application d'un signal d'excitation périodique (66) pour faire vibrer l'élément à ou près de sa fréquence de résonance, et le contrôle de l'effet dudit milieu sur l'élément vibrant, caractérisé en ce qu'une fois le signal d'excitation supprimé, l'élément vibrant réagit au signal d'excitation en générant un signal de retour (67), et le signal de tension de retour est contrôlé en vue de détecter un déplacement de la fréquence de résonance.

2. Procédé selon la revendication 1, dans lequel le signal d'excitation (66) est appliqué à l'élément sensible (10, 30, 40, 50) de façon intermittente, et le signal de retour (67) est contrôlé dans les intervalles séparant les signaux d'excitation par multiplexage à répartition dans le temps.

3. Procédé selon la revendication 2, dans lequel la période de chaque signal de retour (67) est détectée, et la période détectée commande la fréquence du signal d'excitation (66) subséquent appliqué à l'élément sensible.

4. Procédé selon l'une quelconque des revendications 1 à 3, dans lequel le contrôle de chaque signal de retour (67) est retardé pendant un intervalle prédéterminé une fois le signal d'excitation (66) supprimé.

5. Procédé selon la revendication 4, dans lequel le signal d'excitation (66) est fourni depuis un accès d'entrée/sortie (E/S) (71) d'un microrégisseur (60), et le signal de retour (67) est reçu au niveau dudit accès.

6. Procédé selon la revendication 5, dans lequel l'accès d'entrée/sortie (71) est maintenu à une tension prédéterminée pendant l'intervalle de retard et avant le contrôle du signal de retour.

7. 'Procédé selon l'une quelconque des revendications précédentes, dans lequel le signal d'excitation (66) est initialement balayé sur une gamme de fréquences comprenant la fréquence de résonance attendue de l'élément sensible.

8. Procédé selon la revendication 7, dans lequel le signal de retour (67) est contrôlé au cours dudit balayage de fréquences pour détecter le signal d'excitation la plus proche de la fréquence de résonance.

9. Procédé selon la revendication 8, dans lequel le signal de retour (67) est contrôlé au cours du balayage de fréquences par détection du nombre de cycles reçus dont l'amplitude dépasse un niveau de seuil prédéterminé.

10. Procédé selon l'une quelconque des revendications précédentes, dans lequel le signal d'excitation (66) est appliqué successivement à une pluralité d'éléments sensibles (10, 30, 40, 50) espacés les uns des autres, et les signaux de retour (67) issus de chaque élément sensible sont contrôlés pour détecter une variation quelconque d'une caractéristique d'un milieu entourant les éléments.

11. Procédé selon la revendication 10, dans lequel les signaux de retour sont contrôlés pour détecter la présence ou l'absence d'un fluide au niveau des éléments sensibles respectifs.

12. Utilisation d'un procédé selon l'une quelconque des revendications précédentes pour détecter le niveau d'un fluide.
